# EUROPEAN PATENT SPECIFICATION

(11) **EP 3 747 710 B1**
(45) Date of publication and mention of the grant of the patent: **16.03.2022**
(21) Application number: 19305740.3
(22) Date of filing: 07.06.2019
(51) Int. Cl.: B60S 1/40

(54) **WINDSHIELD WIPER BLADE CONNECTOR**
SCHEIBENWISCHERBLATTVERBINDER
CONNECTEUR DE BALAI D'ESSUIE-GLACE DE PARE-BRISE

(43) Date of publication of application: 09.12.2020
(73) Proprietor: Valeo Systèmes d'Essuyage, 78322 Le Mesnil Saint Denis (FR)
(72) Inventor: GAUCHER, Vincent, 63500 ISSOIRE (FR); HOUSSAT, Stéphane, 63500 ISSOIRE (FR); JOMARD, Olivier, 63500 ISSOIRE (FR)
(74) Representative: Valeo Visibility

(56) References cited:
- DE-C1- 3 608 936
- GB-A- 2 034 580
- US-A1- 2017 274 872

## Description

### TECHNICAL FIELD OF THE INVENTION

A wiper blade assembly of the type used for clearing water from a windshield or windscreen, and more particularly toward an improved connector for joining a wiper blade to any one of various style wiper arms ends including hook slot styles.

### BACKGROUND OF THE INVENTION

Windshield wipers are used to remove water from the windshield or windscreen of motor vehicles and in related applications. In a typical wiper assembly, a wiper blade connects to the free end of an oscillating or sweeping wiper arm through a central connection device, known as a connector. The connector is usually clipped onto the top side of the wiper blade, generally midway along its length.

Traditionally, the free sweeping end of wiper arms are configured in one of several recurring styles which include hook slot arms. Hook-slot style arms present an end portion which is bent to form a hook. They are attached by sliding the hook over the connector until a tab borne by a cantilevered beam of the connector automatically locks in a slot of the hook when the arm reaches an attached position. Generally, the hook is prevented to slide beyond its attached position by abutment against a stop.

Hook-slot type of wiper arm end may come in a variety of sizes. For example, hook-slot type arms typically have hook bar widths of 9 mm or 12 mm, and a thickness of 4 mm. The hook of these two size classes are referred to as either 9x4 or 12x4 styles. In at least one of these size classes, there are also long hooks and short hooks. There are for instance long 9x4 wiper arms and short 9x4 wiper arms.

To adapt these two thicknesses of arm wiper hook, the connector typically comprises a first stop to block the 12x4 wiper arm in the attached position, and a second stop to block the 9x4 wiper arm in the attached position. The first stop and the second stop are generally offset longitudinally so that the 9x4 wiper arm passes between the first stop during its sliding toward the attached position.

For replacement blade sales, the connector must be able to accommodate several, or more preferably all, of these arm end sizes. However, wiper arms with the same width but having hooks of different length can be secured by the same tab, but they cannot be blocked in their attached position by the same stop. Indeed, the slot of a short 9x4 arm will abut in its attached by the second stop, but the long 12x4 arm will reach its attached position before the abutment against the second stop.

Document US 2017/274872 A1 discloses a connector for joining a wiper blade frame to a hook-slot wiper arm according to the preamble of claim 1.

### SUMMARY OF THE INVENTION

The invention is defined by the subject-matter of independent claim 1.

Embodiments of the connector according to the invention may also include one or more of the following features:
- the recess comprises a back face which form a stop face for the end of the wiper arm;
- the locking face is arranged on a tongue which extends longitudinally from the stop face;
- the first tab comprises a front ramped face to deflect the corresponding first cantilevered beam from its rest position toward its retracted position when a wiper arm is attached to the connector.

The invention also provides an assembly comprising a hook-slot wiper arm and a connector according to the teachings of the invention, characterized in that a distal end portion of the wiper arm comprises a slot in which the first tab engages in its attached position with a longitudinal clearance, the free end of the wiper arm being inserted in the recess before a front end face of the slot engages the front ramped face of the first tab.

The assembly according to the invention may also include the following feature:
- the free end of the wiper arm is extracted from the recess before a rear end face of the slot touches a stepped face of the first tab.

### BRIEF DESCRIPTION OF THE DRAWINGS

Other features and advantages of the invention will be apparent from the following detailed description, including the drawings, in which:
Other features and advantages of the invention will be apparent from the following detailed description, including the drawings, in which:
- figure 1 is a perspective view of an exemplary wiper blade frame with a connector according to the invention exploded therefrom;
- figure 2 is a perspective view of a hook-slot type wiper arm intended to be attached with the connector of figure 1;
- figure 3A to 3B is an illustrative view of a variety of 9x4 and 12 x4 wiper arms that can be connected directly to the connector of figure 1;
- figure 4 is a bottom perspective view of the connector of figure 1;
- figure 5 is a perspective cross-sectional view of the connector taken generally along the longitudinal line 5-5 in figure 4;
- figure 6 is a bottom view of the connector of figure 4;
- figure 7 to 10 illustrate the connector in cross-section as a short 9x4 hook end of a wiper arm is progressively connected thereto;
- figure 11 shows the connector in cross-section with a long 9x4 hook end of a wiper arm connected thereto;
- figure 12 shows the connector in cross-section with a 12x4 hook end of a wiper arm connected thereto.

### DETAILED DESCRIPTION OF THE DRAWINGS

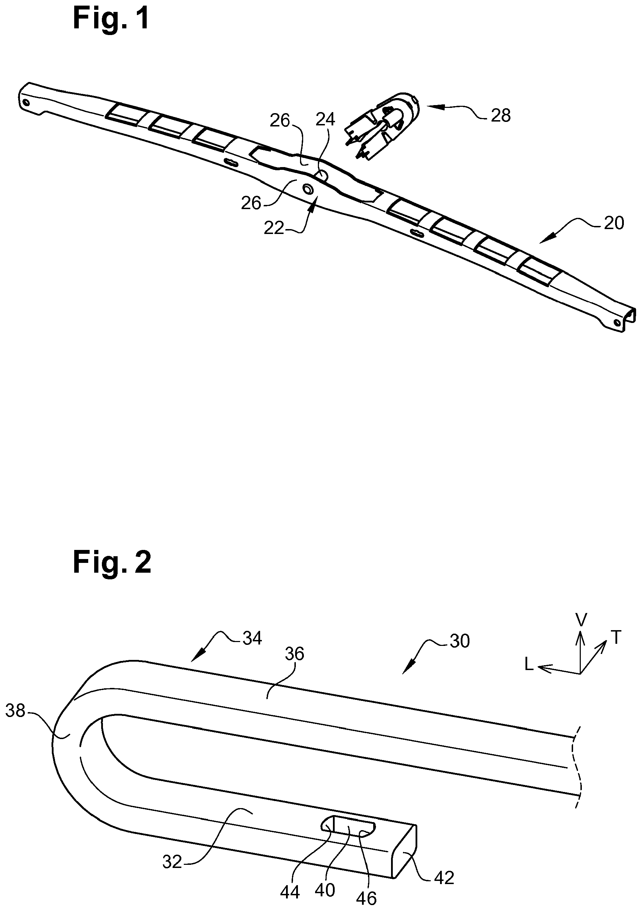

Referring to the figures, wherein like numerals indicate like or corresponding parts throughout the several views, one style of windshield wiper blade frame is generally shown at 20 in figures 1 and 2.

In the following description, longitudinal, vertical and transverse orientations are indicated by the geometrical frame of reference "L,V,T" of the figures. The vertical orientation is not related to the direction of gravity.

The wiper blade frame 20 illustrated here is designed to receive an elongated wiper element (not shown) adapted for direct contact against the windshield of a motor vehicle to scrape water and snow from the windshield as the blade assembly is swept back and forth in an oscillating, repetitive pattern.

The wiper blade frame 20 comprises a bridge piece or portion 22 midway along its length. A rivet 24 is fixed crosswise between upstanding ears 26 of the bridge 22.

A connector, generally indicated at 28, is adapted to snap-fit over the rivet 24. The connector 28 forms the basis for connecting to a variety of hook-shaped wiper arms. The connector 28 is adapted to cooperate with any style of wiper blade frame 20 by attaching directly to the rivet 24.

As shown in Figure 2, in a hook-slot wiper arm 30, a distal end portion 32 of the wiper arm 30 is bent to define a hook 34. The hook 34 presents a U-shaped configuration comprises a longitudinal main portion 36 of the arm 30, the distal end portion 32 which is parallel to the main portion 36, and a bight portion 38 which link the distal end portion 32 to the main portion 36. The distal end portion 32 extends in a longitudinal direction.

A slot 40 is located in the distal end portion 32 near a free end 42 of the wiper arm 30. The bight portion 38 is arranged at a front extremity of the wiper arm 30 while the free end 42 of the wiper arm 30 is turned backward because of the U-shaped configuration of the hook 34.

The slot 40 faces the main portion 36 of the wiper arm 30. The slot 40 is delimited longitudinally by a front end 44 which is closer to the bight portion 38 and by a rear end 46 which is closer to the free end 42 of the wiper arm 30.

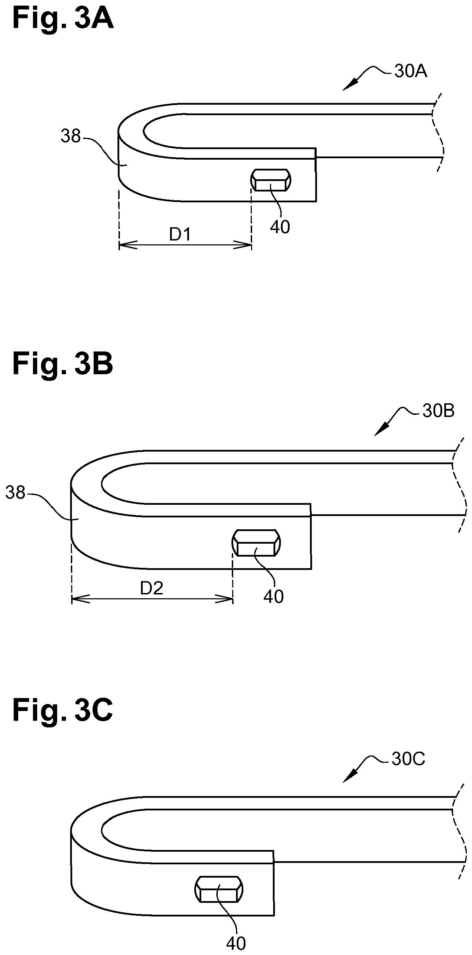

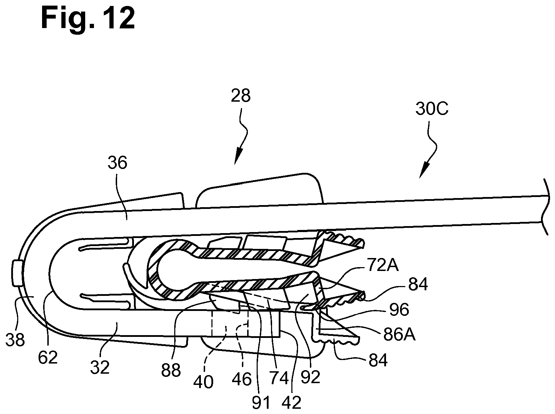

Hook type wiper arms 30 typically have hook bar thicknesses of 4 mm, especially for the wiper arms 30 for trucks. The hook 34 widths are commonly 9 mm or 12 mm with a thickness of 4 mm, so that these two size classes are referred to as either 9x4, as illustrated by the wiper arms 30A and 30B in the figures 3A and 3B, or 12x4, as illustrated by the wiper arm 30C in the figure 3C.

Moreover, there are wiper arms 30 with short distal end portion 32 and some with long distal end portion 32. For instance, there are 9x4 hook ends of the short length variety or short 9x4 wiper arms 30A, as illustrated in figure 3A, and of the long length variety or long 9x4 wiper arms 30B as illustrated on figure 3B. On a short 9x4 wiper arm 30A, the slot 40 is arranged at a shorter longitudinal distance "D1" of the bight end 38 than the distance "D2" between the slot 40 of a long 9x4 wiper arm 30B and its bight portion 38.

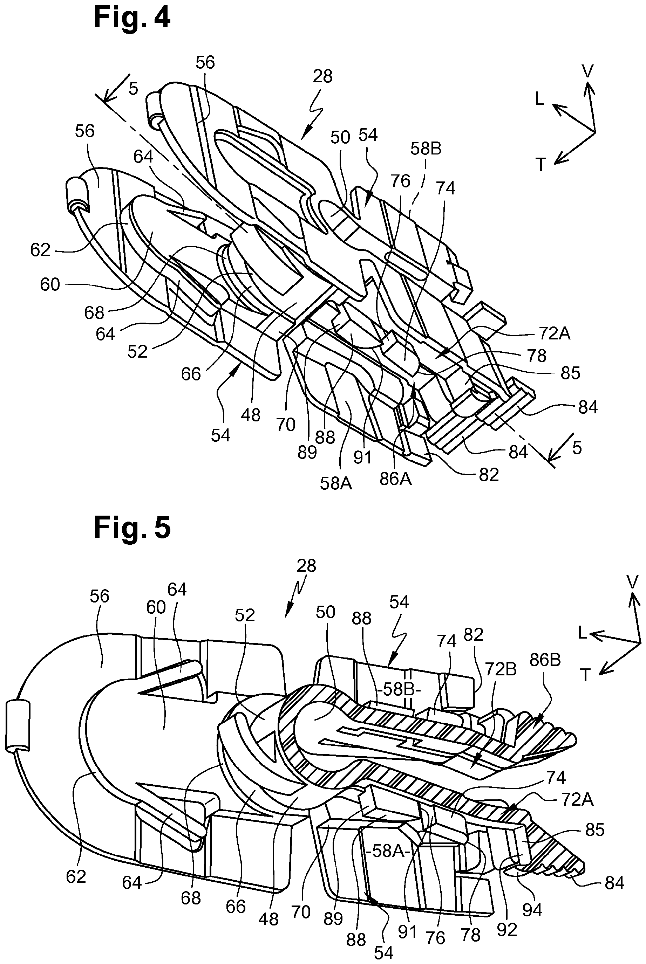

Figures 4, 5 and 6 show various views of the connector 28 from different perspectives and also in a longitudinally sectioned view (FIG. 5). The connector 28 includes a central body section 48 in which a rivet-receiving socket 50 is formed. The rivet-receiving socket 50 has a key-hole shape that snap-locks to the rivet 24 via an interference-fit in its narrow throat area. The rivet-receiving socket 50 opens longitudinally toward the back.

The central body section 48 presents a rounded forward nose profile 52. The connector 28 further includes a pair of side walls 54. The side walls 54 interconnect the central body section 48 on respective inner faces thereof.

The side walls 54 are identical by symmetry with respect to a median longitudinal vertical plan of the connector 28. The side walls 54 include cantilevered extensions 56 projecting beyond the nose profile 52.

The side walls 54 also extend above and below the central body section 48 to define a lower channel 58A and an upper channel 58B. The width of the channels 58A, 58B is greater than the width of the wider type of wiper arm intended to be attached, in this case, 12x4 wiper arm 30C. As discussed below, each channel 58A, 58B secures the main portion 36 or the distal end portion 32 of the hook 34.

Each side wall 54 comprises a first projection 60 which extends transversally in the channel 58A, 58B from an inner face. This first projection 60 is delimited in the forward direction by a rounded end face which forms a first stop 62 which block the sliding of the wider type of wiper arm, for example the 12x4 wiper arm 30C, in an attached position. The first stop 62 is arranged at a distance forward from the nose profile 52 of the central body section 48.

The first projection 60 also comprises an upper and a lower elastically flexible legs 64 extending from each end of the first stop 62 and inclined toward the back. These legs 64 are intended to center the hook 34 vertically relative to the central body section 48 of the connector 28.

Each side wall 54 also comprises a second projection 66 which extends transversally in the channel 58A, 58B beyond the first projection 60. This second projection 66 is limited to the front by a rounded end face which forms a second stop 68 in an attached position for the short 9x4 wiper arm 30A.

The second stop 68 is offset longitudinally with respect to the first stop 62. More particularly, the second stop 68 is arranged longitudinally between the nose profile 52 of the central body section 48 and the first stop 62.

The second projection 66 also comprises generally planar upper and lower faces 70 which extend longitudinally to the back from the ends of the second stop 68. The upper, respectively lower, planar face 70 is globally coplanar with the upper end, respectively lower end, of the first stop 62.

The first projections 60 are transversally spaced with a distance "W1" which is greater the width "W2" of the narrower type of wiper arms 30A, 30B, but less than the width of the wider type of wiper arm 30C. Therefore, the hook 34 of the 9x4 wiper arms 30A, 30B can be received in the channels 58A, 58B between the first projections 60.

A first cantilevered beam 72A extends from the central body section 48. The first cantilevered beam 72A, which is not directly attached to the side walls 54, is positioned at the top of the lower channel 58A. The first cantilevered beam 72A is used to secure the connector 28 to the wiper arms 30, particularly the 9x4 wiper arms 30A, 30B. To this end, the first cantilevered beam 72A includes a first tab 74 that is used to secure the connector 28 to a 9x4 wiper arm 30A, 30B in its attached position. The first tab 74 includes a ramped face 76 at a front end closer to the nose profile 52 and a stepped face 78 at the back end. The first tab 74 is arranged in a first longitudinal position with respect to the nose profile 52. When the first cantilevered beam 72A is in rest position, the first tab 74 extends vertically in the lower channel 58A. The first cantilevered beam 72A can resiliently bend from the rest position toward retracted position in which the first tab 74 is pushed upward outside the lower channel 58A.

The first cantilevered beam 72A comprises a rear free end that goes beyond a rear edge 82 of the side walls 54 to the back. The free end of the first cantilevered beam 72A includes a textured pushbutton 84 that may be depressed to bend the first cantilevered beam 72A and retract the first tab 74 from the slot 40 to release the connector 28 from the wiper arm 30.

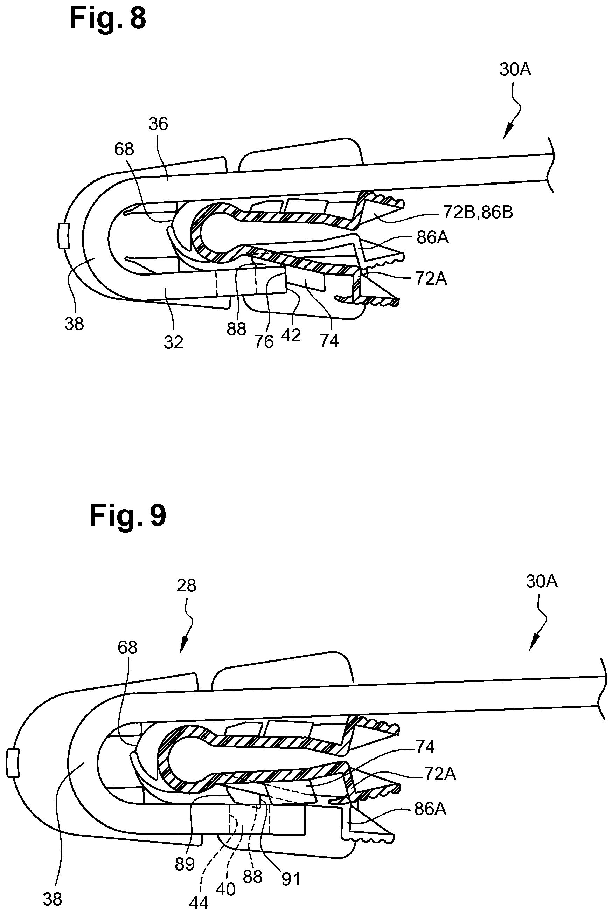

The pushbutton 84 is vertically offset from the body of the first cantilever beam 72A. The pushbutton 84 is more particularly connected to the first cantilever beam 72A by a stepped back face 85 which extends in the same direction as the first tab 74 from the body of the cantilever beam 72A. As shown in figure 9, the back face 85 is intended to be arranged near the end face 42 of a 9x4 wiper arm 30A, 30B in its attached position.

The invention provides a connector 28 comprising at least a second cantilevered beam 86A extending longitudinally to the back from the central body section 48 to accommodate a 12x4 wiper arm 30C as illustrated in figure 3C. Indeed, for short 12x4 wiper arms 30C, the slot 40 is longitudinally offset from the first tab 74 when the wiper arm 30C abuts against the first stop 62 in its attached position.

The second cantilevered beam 86A presents a structure similar to the first cantilevered beam 72A. Therefore, it comprises a second tab 88 which is essentially similar to the first tab 74. It thus comprises a front ramped face 89 and a rear stepped face 91 However, the second tab 88 extends in a second position longitudinally offset with respect to the first tab 74 so that the second tab 88 engages a slot 40 of the 12x4 wiper arm 30C to secure the connector 28 to the wiper arm 30C in the attached position.

In this embodiment, the second tab 88 is closer to the first stop 62 than the first tab 74 so that it can engage the slot 40 of a 12x4 wiper arm 30C in its attached position.

In the embodiments shown in the figures, the first tab 74 and the second tab 88 are aligned longitudinally on the same side of the central body section 48, that is to say in the same channel 58A. The first cantilevered beam 72A and the second cantilevered beam 86A form a pair of cantilevered beams extending side by side on the top of the lower channel 58A, between the two side walls 54.

The cantilevered beams 72A, 86A of the pair can be bent independently of each other. Therefore, each cantilevered beam 72A, 86A can be bent toward its retracted position while the other cantilevered beam 86A, 72A stays in its rest position.

The pushbuttons 84 of the two cantilevered beams 72A of the pair are arranged side by side so that they can be pushed simultaneously with one finger to bend manually the cantilevered beams 72A, 86A of the pair toward their retracted position.

In order to simplify the use of the connector 28, it presents a second pair of first and second cantilevered beams 72B, 86B arranged in the upper channel 58B. Each cantilevered beams 72B, 86B of the second pair also comprises a first tab 74 and a second tab 88. The tabs 74, 88 of second pair are arranged symmetrically with respect to the tabs 74, 88 of the first pair in relation to a median transverse longitudinal plane of the central body section 48. The connector 28 can thus be used upside down with the same result and the same procedure of attachment.

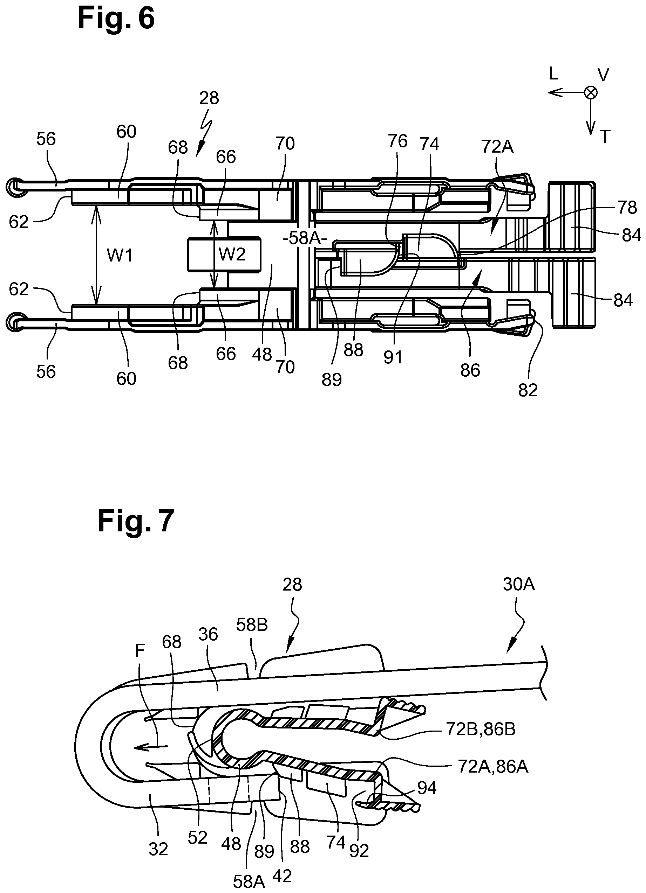

As shown in Figs. 7 to 11, to attach the connector 28 to a short 9x4 wiper arm 30A, the connector 28 is positioned with the upper channel 58B (or indifferently the lower channel 58A when the connector 28 is symmetric) next to the main portion 36 of the wiper arm 30B. Since there are no slots in the main portion 36 of the wiper arm 30A, the cantilevered beams 72B, 86B of the upper pair are biased toward their retracted position in which they stay until the detachment of the wiper arm 30A.

The connector 28 is then moved along the wiper arm 30A in the direction indicated by the arrow F, so that the nose profile 52 of the central body section 48 passes between the distal end portion 32 and the main portion 36 of the wiper arm 30A, and the bight portion 38 of the wiper arm 30A passes between extensions 56 of the connector 28. The distal end portion 32 is thus received in the lower channel 58A.

When the free end 42 of the wiper arm 30A encounters the second tab 88, the hook 34 slides along the ramped face 89 in a horizontal direction. This generates an upward force that pushes up on the second cantilevered beam 86A and bends the beam 86A (Fig. 8) from the rest position toward the retracted position. The hook 34 continues to exert the upward force on the second cantilevered beam 86A until the stepped face 91 of the second tab 88 is aligned with the slot 40. The second cantilevered beam 86A snaps back toward its rest position and engages the second tab 88 into the slot 40 (Fig. 9).

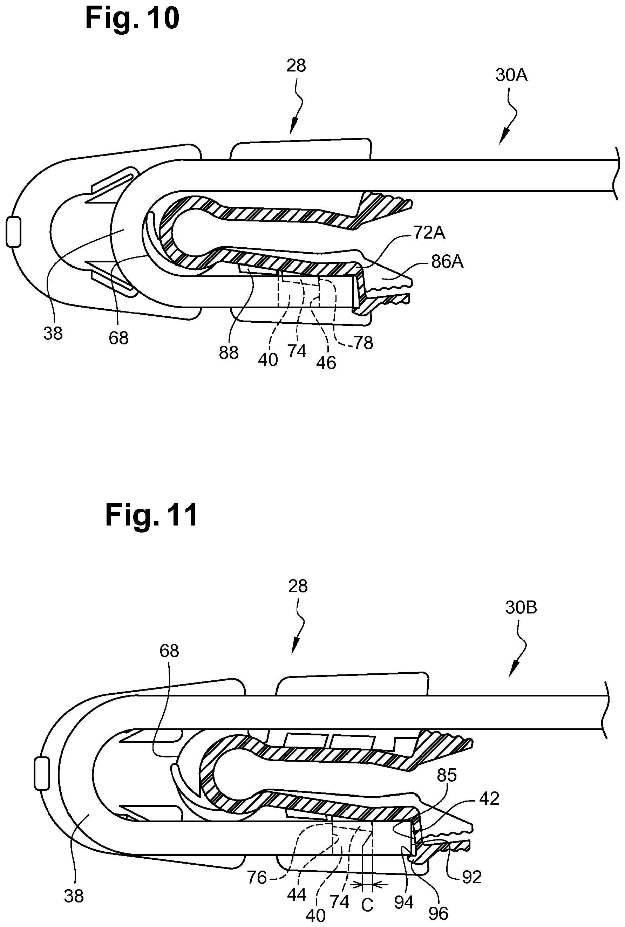

The connector 28 continues to slide longitudinally forward in the hook 34, the front end 44 of the slot 40 slides along the ramped face 89 of the second tab 88 in a horizontal direction. This generates an upward force that pushes up again on the second cantilevered beam 86A and bends the beam 86A (Fig. 10) from the rest position toward the retracted position. The second cantilevered beam 86A will be maintained toward its retracted position by contact with the distal end portion 32 of the hook 34 until the detachment of the wiper arm 30A.

When the free end 42 of the wiper arm 30A encounters the first tab 74, the hook 34 slides along the ramped face 76 in a longitudinal direction. This generates an upward force that pushes down on the first cantilevered beam 72A and bends the beam 72A (Fig. 9) from the rest position toward the retracted position. The hook 34 continues to exert the upward force on the first cantilevered beam 72A until the stepped face 78 of the first tab 74 is aligned with the slot 40. The first cantilevered beam 72A snaps back into place in its rest position and engages the first tab 74 into the slot 40 (Fig. 10).

At that point, the short 9x4 wiper arm 30A is prevented to continue its longitudinal sliding by abutment of the bight portion 38 against the associated stop 68. The wiper arm 30A is in its attached position. When the first tab 74 is in the slot 40, the stepped face 78 of the first tab 74 abuts against the rear end 46 of the slot 40 to secure the wiper arm 30A in its attached position on the connector 28.

The connector 28 may be removed from the arm 30A in a two-step process. A user first depresses the pushbuttons 84 to push down simultaneously on the two cantilevered beams 72A, 86A of the lower pair to release the engaged tab 74 or 88 from the slot 40, and to maintain the other tab in its rest position. The user then slides the connector 28 backward from between the distal end portion 32 and the main portion 36.

As represented in figure 11, when the wiper arm is of the long 9x4 type 30B, the first tab 74 is received in slot 40 while the bight portion 38 has not reached the second stop 68. Therefore, if a user continues to slide the connector 28 forward until the bight portion 38 encounters the second stop 66, the first cantilevered beam 72A will bent toward its retracted position by contact of the front end 44 of the slot 40 with the ramped face 76 of the first tab 74. Therefore the first tab 74 will no longer block the sliding of the connector 28 backward with respect to the wiper arm 30B.

To solve this problem, the invention proposes that a free end portion of the cantilevered beam 76A comprises a recess 92 for receiving the free end 42 of the arm wiper 30B in its attached position. The recess 92 comprises a locking face 94 to lock the cantilevered beam 76A in its rest position like a deadbolt latch, the distal end portion 32 acting as a deadbolt while the recess 92 acts as strike plate that retain the first cantilevered beam 76A in its rest position.

According to the invention, the recess 92 is arranged on the first cantilevered beam 76A so that when the first tab 74 engages the slot of the long 9x4 wiper arm 30B in its attached position, the free end 42 of the long 9x4 wiper arm 30B is inserted in the recess 92 before the front end face 44 of the slot 40 encounters the ramped face 76 of the first tab 74.

The recess 92 is delimited backward by the stepped back face 85 of the first cantilevered beam which forms a stop face for the end 42 of the wiper arm 30B. This prevent the wiper arm to bias the locking face too strongly.

The locking face 94 is arranged on an upper surface of a tongue 96 which extends longitudinally toward the front from the back face 85. The recess 92 is open transversally in order to accommodate wiper arms of different widths.

As shown on figure 11, the first tab 74 is received in the slot 40 with a longitudinal clearance "C" so that the free end 42 of the long 9x4 wiper arm 30B is extracted from the recess 92 before the rear end face 46 of the slot 40 touches the stepped face 46 of the first tab 74. This clearance "C" allows a user to command the first cantilevered beam 76A toward its retracted position during the detachment the 9x4 wiper arm 30B from the connector 28.

With this arrangement, even if the connector 28 is forced to slide frontward in the hook 34 of a 9x4 long wiper arm 30B, the first tab 74 will stay engaged in the slot 40 and prevent the sliding of the connector 28 beyond the attached position of the wiper arm 30B.

In the embodiment shown on the figures, each first cantilevered beam 76A, 76B of each pair comprises a recess 92 with a locking face. However none of the second cantilevered beams 86A, 86B comprises such a recess.

Indeed, as shown on figure 12, when a 12x4 wiper arm 30C is attached to the connector 28, the wiper arm 30C is prevented to continue its longitudinal sliding by abutment of the bight portion 38 against the associated stop 62. The wiper arm 30C is in its attached position when the second tab 88 is in the slot 40. The stepped face 91 of the second tab 88 abuts against a rear end 46 of the slot 40 to secure the wiper arm 30C in its attached position on the connector 28.

Here, the short 12x4 wiper arm 30C is long enough so that the free end 42 of the wiper arm 30 encounters the first tab 74 before it has reached its attached position. This generates an upward force that pushes up on the first cantilevered beam 72A and bends the beam 72A from the rest position toward the retracted position in which it stays as long as the wiper arm 30C is attached to the connector 28.

In its attached position, the distal end portion of the 12x4 wiper arm 30C is too short to reach the recess 92 of the first cantilevered beam 72A. This means that the tongue 96of the first cantilevered beam 72A will not interfere with the free end 42 of the 12x4 wiper arm 30C.

However, if the second cantilevered beam was equipped with such a tongue, it could prevent the 9x4 wiper arms 30A, 30B to reach their attached position. Therefore, only the first cantilevered beams 76A, 76B having the tab 74 closest to the free end 84 of the cantilevered beam 76A, 76B are equipped with the recess 92.

## Claims

1. A connector (28) for joining a wiper blade frame (20) to a hook-slot wiper arm (30A, 30B), the connector (28) comprising:
- a central body portion (48); and
- at least one first cantilevered beam (72A, 72B) extending longitudinally to the back from the central body portion (48) and comprising a first tab (74) extending therefrom such that when the first cantilevered beam (72A) is in a rest position the first tab (74) engages a slot (40) of a hook-slot wiper arm (30A, 30B) when said wiper arm is in an attached position, said first cantilevered beam being mobile between said rest position and a retracted position in which the first tab (74) is retracted to release the connector (28) from the wiper arm (30A, 30B);
a free end portion (84) of said first cantilevered beam (72A, 72B) comprising a recess (92), the recess (92) comprising a locking face (94) to lock the first cantilevered beam (72A) in its rest position when an end (42) of the wiper arm (30A, 30B) is received in the recess (92) in its attached position, whereby the connector (28) comprises at least two opposed first cantilevered beams (72A, 72B) each comprising a recess (92) with a locking face (94),
**characterized in that** the connector comprises two pairs of opposed cantilevered beams (72A, 86A, 72B, 86B), only the first cantilevered beams (72A, 72B) of one pair comprising a recess (92) with a locking face (94).

2. A connector (28) according to the previous claim, **characterized in that** the recess comprises a back face (85) which form a stop face for the end (42) of the wiper arm (30A, 30B).

3. A connector (28) according to the previous claim, **characterized in that** the locking face (85) is arranged on a tongue (96) which extends longitudinally from the stop face (85).

4. A connector (28) according to any one of the previous claims, **characterized in that** the first tab (74) comprises a front ramped face (76) to deflect the corresponding first cantilevered beam (76A, 76B) from its rest position toward its retracted position when a wiper arm (30A, 30B) is attached to the connector (28).

5. An assembly comprising a hook-slot wiper arm (30A, 30B) and a connector (28) according to the previous claim, **characterized in that** a distal end portion (32) of the wiper arm (30A, 30B) comprises a slot (40) in which the first tab (74) engages in its attached position with a longitudinal clearance (C), the free end (42) of the wiper arm (30A, 30B) being inserted in the recess (92) before a front end face (44) of the slot (40) engages the front ramped face (76) of the first tab (74).

6. An assembly according to the previous claim, **characterized in that** the free end (42) of the wiper arm (30A, 30B) is extracted from the recess (92) before a rear end face (46) of the slot (40) touches a stepped face (78) of the first tab (74).

## Patentansprüche

1. Verbinder (28) zum Verbinden eines Wischerblattrahmens (20) mit einem Hakenschlitzwischerarm (30A, 30B), wobei der Verbinder (28) Folgendes umfasst:
- einen mittleren Körperabschnitt (48) und
- mindestens einen ersten auskragenden Balken (72A, 72B), der sich in Längsrichtung von dem mittleren Körperabschnitt (48) nach hinten erstreckt und eine erste Lasche (74) umfasst, die sich so davon erstreckt, dass, wenn der erste auskragende Balken (72A) in einer Ruheposition ist, die erste Lasche (74) einen Schlitz (40) eines Hakenschlitzwischerarms (30A, 30B) in Eingriff nimmt, wenn der Wischerarm in einer angebrachten Position ist, wobei der erste auskragenden Balken zwischen der Ruheposition und einer zurückgezogenen Position beweglich ist, in der die erste Lasche (74) zurückgezogen ist, um den Verbinder (28) aus dem Wischerarm (30A, 30B) freizugeben,
wobei ein freier Endabschnitt (84) des ersten auskragenden Balkens (72A, 72B) eine Aussparung (92) umfasst, wobei die Aussparung (92) eine Arretierungsfläche (94) umfasst, um den ersten auskragenden Balken (72A) in seiner Ruheposition zu arretieren, wenn ein Ende (42) des Wischerarms (30A, 30B) in seiner angebrachten Position in der Aussparung (92) aufgenommen ist,
wobei der Verbinder (28) mindestens zwei gegenüberliegende erste auskragende Balken (72A, 72B) umfasst, die jeweils eine Aussparung (92) mit einer Arretierungsfläche (94) umfassen,
**dadurch gekennzeichnet, dass** der Verbinder zwei Paare gegenüberliegender auskragender Balken (72A, 86A, 72B, 86B) umfasst, wobei nur die ersten auskragenden Balken (72A, 72B) eines Paars eine Aussparung (92) mit einer Arretierungsfläche (94) umfassen.

2. Verbinder (28) nach dem vorhergehenden Anspruch, **dadurch gekennzeichnet, dass** die Aussparung eine hintere Fläche (85) umfasst, die eine Anlagefläche für das Ende (42) des Wischerarms (30A, 30B) bildet.

3. Verbinder (28) nach dem vorhergehenden Anspruch, **dadurch gekennzeichnet, dass** die Arretierungsfläche (85) an einer Zunge (96) angeordnet ist, die sich in Längsrichtung von der Anlagefläche (85) erstreckt.

4. Verbinder (28) nach einem der vorhergehenden Ansprüche, **dadurch gekennzeichnet, dass** die erste Lasche (74) eine rampenförmige Vorderfläche (76) umfasst, um den entsprechenden ersten auskragenden Balken (76A, 76B) aus seiner Ruheposition zu seiner zurückgezogenen Position hin abzulenken, wenn ein Wischerarm (30A, 30B) an dem Verbinder (28) angebracht ist.

5. Anordnung, umfassend einen Hakenschlitzwischerarm (30A, 30B) und einen Verbinder (28) nach dem vorhergehenden Anspruch, **dadurch gekennzeichnet, dass** ein distaler Endabschnitt (32) des Wischerarms (30A, 30B) einen Schlitz (40) umfasst, in dem die erste Lasche (74) in ihrer angebrachten Position mit einem Längsfreiraum (C) in Eingriff kommt, wobei das freie Ende (42) des Wischerarms (30A, 30B) in die Aussparung (92) eingeführt wird, bevor eine vordere Endfläche (44) des Schlitzes (40) die rampenförmige Vorderfläche (76) der ersten Lasche (74) in Eingriff nimmt.

6. Anordnung nach dem vorhergehenden Anspruch, **dadurch gekennzeichnet, dass** das freie Ende (42) des Wischerarms (30A, 30B) aus der Aussparung (92) herausgezogen wird, bevor eine hintere Endfläche (46) des Schlitzes (40) eine gestufte Fläche (78) der ersten Lasche (74) berührt.

## Revendications

1. Raccord (28) servant à unir une ossature de balai d'essuie-glace (20) à un bras d'essuie-glace recourbé en crochet (30A, 30B), le raccord (28) comprenant :
- une partie corps centrale (48) ; et
- au moins une première branche en porte-à-faux (72A, 72B) s'étendant longitudinalement vers l'arrière à partir de la partie corps centrale (48) et comprenant une première saillie (74) s'étendant à partir de celle-ci de telle sorte que, lorsque la première branche en porte-à-faux (72A) se trouve dans une position de repos, la première saillie (74) vienne en prise avec une fente (40) d'un bras d'essuie-glace recourbé en crochet (30A, 30B) lorsque ledit bras d'essuie-glace se trouve dans une position attachée, ladite première branche en porte-à-faux étant mobile entre ladite position de repos et une position rétractée dans laquelle la première saillie (74) est rétractée pour libérer le raccord (28) du bras d'essuie-glace (30A, 30B) ;
une partie d'extrémité libre (84) de ladite première branche en porte-à-faux (72A, 72B) comprenant une cavité (92), la cavité (92) comprenant une face de blocage (94) pour bloquer la première branche en porte-à-faux (72A) dans sa position de repos lorsqu'une extrémité (42) du bras d'essuie-glace (30A, 30B) est reçue dans la cavité (92) dans sa position attachée,
le raccord (28) comprenant au moins deux premières branches en porte-à-faux opposées (72A, 72B) comprenant chacune une cavité (92) avec une face de blocage (94),
**caractérisé en ce que** le raccord comprend deux paires de branches en porte-à-faux opposées (72A, 86A, 72B, 86B), seules les premières branches en porte-à-faux (72A, 72B) d'une paire comprenant une cavité (92) avec une face de blocage (94).

2. Raccord (28) selon la revendication précédente, **caractérisé en ce que** la cavité comprend une face arrière (85) qui forme une face d'arrêt pour l'extrémité (42) du bras d'essuie-glace (30A, 30B).

3. Raccord (28) selon la revendication précédente, **caractérisé en ce que** la face de blocage (85) est placée sur une languette (96) qui s'étend longitudinalement à partir de la face d'arrêt (85).

4. Raccord (28) selon l'une quelconque des revendications précédentes, **caractérisé en ce que** la première saillie (74) comprend une face avant en pente (76) pour dévier la première branche en porte-à-faux (76A, 76B) correspondante de sa position de repos vers sa position rétractée lorsqu'un bras d'essuie-glace (30A, 30B) est attaché au raccord (28).

5. Ensemble comprenant un bras d'essuie-glace recourbé en crochet (30A, 30B) et un raccord (28) selon la revendication précédente, **caractérisé en ce qu'**une partie d'extrémité distale (32) du bras d'essuie-glace (30A, 30B) comprend une fente (40) dans laquelle la première saillie (74) vient en prise dans sa position attachée avec un dégagement longitudinal (C), l'extrémité libre (42) du bras d'essuie-glace (30A, 30B) étant insérée dans la cavité (92) avant qu'une face d'extrémité avant (44) de la fente (40) ne vienne en prise avec la face avant en pente (76) de la première saillie (74).

6. Ensemble selon la revendication précédente, **caractérisé en ce que** l'extrémité libre (42) du bras d'essuie-glace (30A, 30B) est extraite de la cavité (92) avant qu'une face d'extrémité arrière (46) de la fente (40) ne vienne en contact avec une face en gradin (78) de la première saillie (74).
